(19) **Europäisches Patentamt / European Patent Office / Office européen des brevets**

(11) **EP 3 751 112 B1**

(12) **FASCICULE DE BREVET EUROPEEN**

(45) Date de publication et mention
de la délivrance du brevet:
**03.07.2024 Bulletin 2024/27**

(21) Numéro de dépôt: **20172307.9**

(22) Date de dépôt: **30.04.2020**

(51) Classification Internationale des Brevets (IPC):
***F02C 6/12*** *(2006.01)*

(52) Classification Coopérative des Brevets (CPC):
**F02C 6/12;** F05D 2220/40; F05D 2220/76;
F05D 2260/40311; Y02T 10/12

(54) **PROCÉDÉ DE PILOTAGE D'UN ENSEMBLE COMPORTANT UN TURBOCOMPRESSEUR ET DES MOYENS COMPLÉMENTAIRES D' ENTRAÎNEMENT**

STEUERUNGSVERFAHREN EINER EINHEIT, DIE EINEN TURBOKOMPRESSOR UND ZUSÄTZLICHE ANTRIEBSMITTEL UMFASST

METHOD FOR CONTROLLING AN ASSEMBLY COMPRISING A TURBOCHARGER AND COMPLEMENTARY DRIVING MEANS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.06.2019 FR 1906300**

(43) Date de publication de la demande:
**16.12.2020 Bulletin 2020/51**

(73) Titulaire: **NEW H POWERTRAIN HOLDING, S.L.U.**
**47008 Valladolid (ES)**

(72) Inventeur: **CHAUVELIER, Eric**
**78320 LE MESNIL SAINT DENIS (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**DE-A1-102009 001 796    DE-A1-102011 005 825**
**DE-A1-102014 218 539    US-A1- 2016 017 793**

**EP 3 751 112 B1**

**Description**

L'invention concerne le domaine des turbocompresseurs de véhicules automobiles. Il concerne plus particulièrement un ensemble comportant un turbocompresseur et des moyens complémentaires d'entraînement, ainsi qu'un procédé de pilotage d'un tel ensemble.

Afin d'améliorer le rendement d'un moteur à combustion, il est courant de l'équiper d'un turbocompresseur augmentant le taux de compression à l'intérieur des cylindres du moteur.

Un turbocompresseur est composé d'une turbine et d'un compresseur entraîné en rotation par la turbine. Classiquement, un arbre relie directement la turbine au compresseur. La turbine est disposée dans le circuit d'échappement du moteur sur le trajet des gaz d'échappement et est entraînée en rotation par les gaz d'échappement. Le compresseur est disposé dans le circuit d'admission sur le trajet des gaz d'admission du moteur. Il compresse les gaz destinés à être admis dans le moteur, permettant une suralimentation du moteur par rapport à une admission à la pression atmosphérique.

Une suralimentation du moteur par le turbocompresseur permet d'améliorer une montée en couple suite à une commande d'accélération. Cependant, à bas régimes, la turbine fournit peu de puissance. Il en résulte un délai dans l'apparition du couple fourni par le moteur en réponse à la commande d'accélération.

Un tel turbocompresseur présente ainsi l'inconvénient d'avoir un temps de réponse trop important à bas régimes.

L'invention propose une solution visant à pallier les inconvénients précités. Un objectif de l'invention est de permettre au turbocompresseur de suralimenter le moteur sur demande avec un temps de réaction court à bas régimes.

L'invention propose un procédé de pilotage d'un ensemble comportant :

- un turbocompresseur de suralimentation d'un moteur à combustion, le turbocompresseur comportant une turbine destinée à être entraînée en rotation par des gaz d'échappement du moteur à combustion, et un compresseur coaxial à la turbine destiné, dans un mouvement de rotation, à comprimer des gaz d'admission du moteur à combustion ; et
- des moyens d'entraînement du compresseur,

lesdits moyens d'entraînement comportant :

- un train épicycloïdal comprenant une couronne extérieure à denture intérieure, un planétaire à denture extérieure coaxial à la couronne, au moins un satellite à denture extérieure qui engrène avec le planétaire et avec la couronne extérieure, et un porte-satellites coaxial à la couronne extérieure et au planétaire ; et
- une machine électrique,

chaque élément choisi parmi la turbine, le compresseur et la machine électrique étant accouplé de façon directe à l'un des composants du train épicycloïdal choisi parmi la couronne, le planétaire et le porte-satellites.

Un tel ensemble est connu notamment des publications DE-A1-102011005825, DE-A1-102009001796, US-A1-2016/017793 et DE-A1-102014218539..

L'ensemble peut être tel que :

- la machine électrique est accouplée au planétaire ;
- le compresseur est accouplé au porte-satellites ; et
- la turbine est accouplée à la couronne.

L'ensemble peut être tel que :

- la machine électrique est accouplée au porte-satellites ;
- le compresseur est accouplé au planétaire ; et
- la turbine est accouplée à la couronne.

L'ensemble peut comporter un frein commandé associé à la machine électrique.

L'ensemble peut comporter un module commandé de synchronisation du train épicycloïdal qui peut être commandé entre une position synchronisée dans laquelle le module de synchronisation solidarise deux éléments parmi la couronne, le planétaire et le porte-satellites, et une position libre des deux éléments.

Le module de synchronisation peut être un crabot.

Selon l'invention, la machine électrique peut fonctionner :

- en moteur électrique pour entraîner en rotation la couronne, le planétaire ou le porte-satellites, ou

- en génératrice de courant en étant entraînée en rotation par la couronne, le planétaire ou le porte-satellites, et l'invention propose alors un procédé de pilotage d'un ensemble selon un mode de réalisation de l'invention, caractérisé en ce qu'il consiste à :

  - réceptionner une valeur de consigne du couple à fournir par le moteur à combustion,
  - déterminer une valeur de seuil d'une pression minimale des gaz d'admission comprimés par le compresseur en fonction de la valeur de consigne du couple à fournir par le moteur à combustion,
  - mesurer la pression des gaz comprimés,
  - comparer la pression des gaz comprimés avec la valeur de seuil d'une pression minimale,
  - faire fonctionner la machine électrique :

    - en moteur électrique si la pression dans le compresseur est inférieure à la valeur de seuil d'une pression minimale,
    - en génératrice de courant si la pression dans le compresseur est supérieure ou égale à la valeur de seuil d'une pression minimale.

Le procédé peut consister à actionner un frein de la machine électrique, le compresseur étant alors entraîné en rotation par la turbine à une vitesse de rotation proportionnelle à la vitesse de rotation de la turbine.

Le procédé peut consister à commander un module de synchronisation en position synchronisée pour synchroniser les vitesses de rotation du compresseur, de la turbine et de la machine électrique.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :

[Fig. 1] représente schématiquement un ensemble selon un premier mode de réalisation de l'invention ;

[Fig. 2] représente schématiquement un ensemble selon un deuxième mode de réalisation de l'invention ;

[Fig. 3] représente schématiquement un ensemble selon un troisième mode de réalisation de l'invention ;

[Fig. 4] est un diagramme qui représente la vitesse de rotation et le couple associés au planétaire, au porte-satellites et à la couronne dans une première configuration ;

[Fig. 5] est un diagramme qui représente la vitesse de rotation et le couple associés au planétaire, au porte-satellites et à la couronne dans une deuxième configuration ;

[Fig. 6] est un diagramme qui représente la vitesse de rotation et le couple associés au planétaire, au porte-satellites et à la couronne dans une troisième configuration.

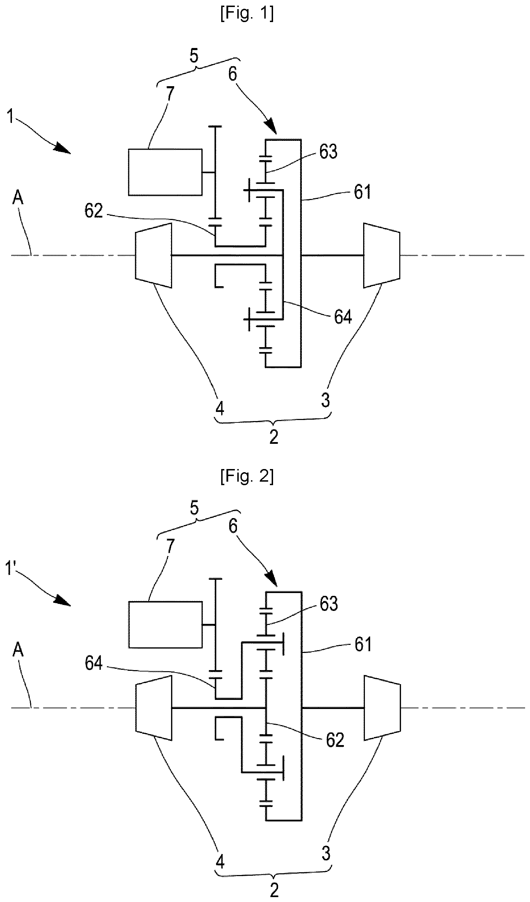

Les figures 1 et 2 représentent un ensemble 1 selon un premier mode de réalisation de l'invention et un ensemble 1' selon un deuxième mode de réalisation de l'invention. Les ensembles 1 et 1' comportent chacun un turbocompresseur 2 et des moyens d'entraînement 5.

Le turbocompresseur 2 est destiné à suralimenter un moteur à combustion non représenté. Le turbocompresseur 2 comporte une turbine 3 et un compresseur 4 coaxiaux.

La turbine 3 est entraînée en rotation par des gaz d'échappement du moteur à combustion. Le moteur à combustion comporte un circuit d'échappement dans lequel la turbine 3 est disposée sur le trajet des gaz d'échappement.

Le compresseur 4 est coaxial à la turbine 3 selon un axe A. Le compresseur 4 est destiné, dans un mouvement de rotation, à comprimer des gaz d'admission du moteur à combustion. Les gaz d'admission peuvent par exemple être de l'air ou des gaz d'échappement ayant subi une recirculation partielle à basse pression.

Les moyens d'entraînement 5 comportent un train épicycloïdal 6 et une machine électrique 7.

Le train épicycloïdal 6 comprend une couronne 61 extérieure, un planétaire 62, ici au moins deux satellites 63 et un porte-satellites 64. La couronne 61, le planétaire 62, les satellites 63 et le porte-satellites 64 sont coaxiaux selon l'axe A commun à la turbine et au compresseur.

La couronne 61 extérieure présente une denture intérieure avec un nombre de dents $Z_{couronne}$.

Le planétaire 62 présente une denture extérieure avec un nombre de dents $Z_{planétaire}$.

Chaque satellite 63 présente une denture extérieure. Chaque satellite 63 engrène avec le planétaire 62 et la couronne 61 extérieure.

En variante, le train épicycloïdal peut comporter un seul satellite 63 ou plus de deux satellites 63.

En variante, le train épicycloïdal peut être remplacé par plusieurs trains épicycloïdaux reliés en série.

Selon l'invention chaque élément choisi parmi la turbine 3, le compresseur 4 et la machine électrique 7 est accouplé de façon directe à l'un des composants du train épicycloïdal 6 choisi parmi la couronne 61, le planétaire 62 et le porte-satellites 64. Six combinaisons d'accouplement sont possibles entre d'une part la turbine 3, le compresseur 4 et la machine électrique 7 et d'autre part la couronne 61, le planétaire 62 et le porte-satellites 64.

Deux combinaisons sont représentées dont une première combinaison selon le premier mode de réalisation de la figure 1 et une deuxième combinaison selon le deuxième mode de réalisation de la figure 2.

La première combinaison est celle de l'ensemble 1 de la figure 1 dans lequel :

- la machine électrique 7 est accouplée au planétaire 62 ;
- le compresseur 4 est accouplé au porte-satellites 64 ; et
- la turbine 3 est accouplée à la couronne 61.

La deuxième combinaison est celle de l'ensemble 1' de la figure 2 dans lequel :

- la machine électrique 7 est accouplée au porte-satellites 64 ;
- le compresseur 4 est accouplé au planétaire 62 ; et
- la turbine 3 est accouplée à la couronne 61.

Une troisième combinaison possible, non représentée, est la suivante :

- la machine électrique 7 est accouplée au planétaire 62 ;
- le compresseur 4 est accouplé à la couronne 61; et
- la turbine 3 est accouplée au porte-satellites 64.

Une quatrième combinaison possible, non représentée, est la suivante :

- la machine électrique 7 est accouplée au porte-satellites 64 ;
- le compresseur 4 est accouplé à la couronne 61 ; et
- la turbine 3 est accouplée au planétaire 62.

Une cinquième combinaison possible, non représentée, est la suivante :

- la machine électrique 7 est accouplée à la couronne 61;
- le compresseur 4 est accouplé au porte-satellites 64 ; et
- la turbine 3 est accouplée au planétaire 62.

Une sixième combinaison possible, non représentée, est la suivante :

- la machine électrique 7 est accouplée à la couronne 61;
- le compresseur 4 est accouplé au planétaire 62 ; et
- la turbine 3 est accouplée au porte-satellites 64.

La machine électrique 7 peut fonctionner :

- en moteur électrique pour entraîner en rotation l'élément auquel elle est accouplée parmi la couronne, le planétaire ou le porte-satellites, ou
- en génératrice de courant en étant entraînée en rotation par l'élément auquel elle est accouplée parmi la couronne, le planétaire ou le porte-satellites.

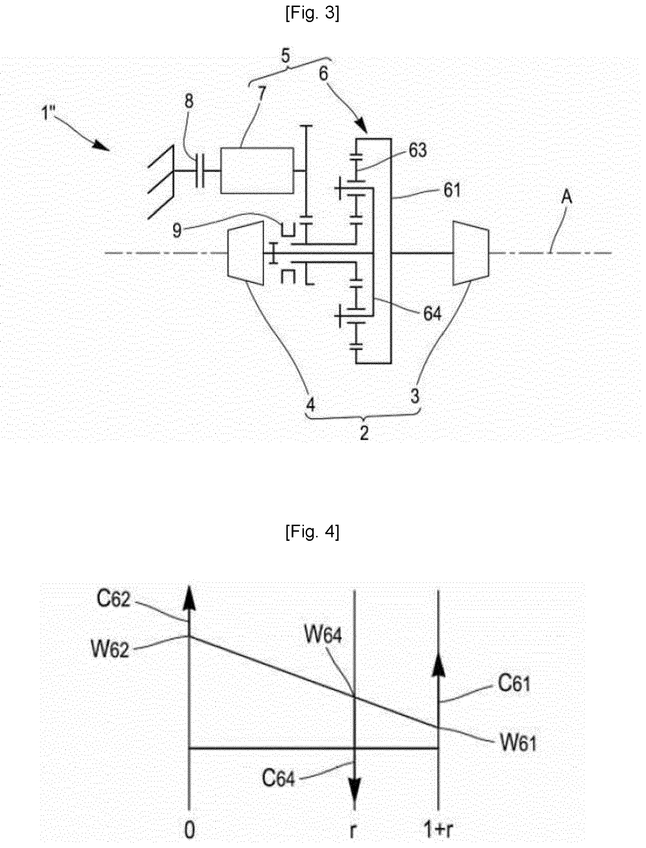

La figure 3 représente un ensemble 1" selon un troisième mode de réalisation de l'invention. L'ensemble 1" est similaire à l'ensemble 1 de la figure 1 et comporte de plus un frein 8 commandé associé à la machine électrique 7.

Lorsqu'il est actionné, le frein 8 freine l'arbre du rotor de la machine électrique. Lorsque le frein 8 n'est plus actionné, il relâche l'arbre du rotor de la machine électrique.

Un tel frein 8 commandé associé à la machine électrique peut être ajouté quelle que soit la combinaison d'accouplement entre d'une part la turbine 3, le compresseur 4 et la machine électrique 7 et d'autre part la couronne 61, le planétaire 62 et le porte-satellites 64.

Dans l'exemple de la figure 3, l'ensemble 1" comporte un module commandé de synchronisation 9 du train épicycloïdal 6.

Un tel module commandé de synchronisation 9 du train épicycloïdal 6 peut être ajouté quelle que soit la combinaison d'accouplement entre d'une part la turbine 3, le compresseur 4 et la machine électrique 7 et d'autre part la couronne 61, le planétaire 62 et le porte-satellites 64.

Le module de synchronisation 9 est indépendant du frein 8. Un ensemble selon l'invention peut comporter un module de synchronisation 9 et pas de frein 8, ou inversement.

Le module de synchronisation 9 est commandé entre une position synchronisée dans laquelle le module de synchronisation 9 solidarise en rotation deux éléments parmi la couronne 61, le planétaire 62 et le porte-satellites 64, et une position libre de ces deux éléments.

Dans l'exemple de la figure 3, le module de synchronisation 9 est un crabot pouvant occuper une position synchronisée dans laquelle le planétaire 62 et le porte-satellites 64 sont solidarisés et une position libre dans laquelle le planétaire 62 et le porte-satellites 64 ne sont pas solidaires en rotation.

En variante, le module de synchronisation 9 peut solidariser :

- le planétaire et la couronne, ou
- le porte-satellites et la couronne.

Le module de synchronisation 9 peut être un crabot, une mâchoire, un cran s'emboîtant de manière amovible dans une rainure ou tout autre mécanisme permettant de passer d'un état solidarisé de deux éléments à un état désolidarisé, et inversement.

Dans le train épicycloïdal 6, les vitesses de rotation de la couronne 61, du planétaire 62 et du porte-satellites 64 sont reliées par la relation de Willis suivante :

$$[Math 1] \ \omega_{planetaire} + r.\omega_{couronne} - (1+r)\omega_{porte-satellite} = 0$$

où :

- $\omega_{planétaire}$ est la vitesse de rotation du planétaire,
- $\omega_{couronne}$ est la vitesse de rotation de la couronne,
- $\omega_{porte-satellites}$ est la vitesse de rotation du porte-satellites, et

$$[Math 2] \ r = \frac{Z_{couronne}}{Z_{planétaire}}.$$

Lorsque deux des trois vitesses de rotation $\omega_{planétaire}$, $\omega_{couronne}$ et $\omega_{porte-satellites}$ sont connues, la troisième peut être calculée avec la relation de Willis ci-dessus. Lorsque le module de synchronisation 9 solidarise deux éléments parmi la couronne 61, le planétaire 62 et le porte-satellites 64, ces deux éléments ont la même vitesse de rotation. D'après la formule de Willis, il en résulte que le troisième élément a la même vitesse de rotation que les deux éléments solidarisés. Le train épicycloïdal est alors synchronisé et la couronne 61, le planétaire 62 et le porte-satellites 64 ont des vitesses de rotation égales.

Les figures 4, 5 et 6 illustrent la relation de Willis. Le point $W_{62}$ a pour abscisse 0 et pour ordonnée $\omega_{planétaire}$, le point $W_{64}$ a pour abscisse r et pour ordonnée $\omega_{porte-satellites}$, le point $W_{61}$ a pour abscisse (1+r) et pour ordonnée $\omega_{couronne}$. Les trois points $W_{62}$, $W_{64}$ et $W_{61}$ sont reliés par une droite illustrant la relation de Willis.

Dans un train épicycloïdal, la somme des couples s'exerçant autour de l'axe de la couronne 61, du planétaire 62 et du porte-satellites 64 est égale à 0 :

$$[Math 3] \ C_{planetaire} + C_{couronne} + C_{porte-satellite} = 0$$

- $C_{planétaire}$ est le couple s'exerçant atour de l'axe du planétaire,
- $C_{couronne}$ est le couple s'exerçant atour de l'axe de la couronne,
- $C_{porte-satellites}$ est le couple s'exerçant atour de l'axe du porte-satellites.

Les flèches $C_{62}$, $C_{64}$ et $C_{61}$ ont pour norme la valeur absolue du couple s'exerçant respectivement sur le planétaire 62, sur le porte-satellites 64 et sur la couronne 61. Chaque flèche pointe vers le haut de la figure si la valeur du couple est positive et vers le bas de la figure si la valeur du couple est négative.

Un ensemble décrit plus haut peut être mis en oeuvre par le procédé de pilotage suivant qui consiste à :

- étape E1 : réceptionner une valeur de consigne du couple à fournir par le moteur à combustion,
- étape E2 : déterminer une valeur de seuil d'une pression minimale des gaz d'admission comprimés par le compresseur en fonction de la valeur de consigne du couple à fournir par le moteur à combustion,
- étape E3 : mesurer la pression des gaz comprimés,
- étape E4 : comparer la pression des gaz comprimés avec la valeur de seuil d'une pression minimale,
- étape E5 : faire fonctionner la machine électrique en moteur électrique ou en génératrice de courant en fonction du résultat de ladite comparaison.

Les étapes E1, E2 et E4 peuvent être mises en oeuvre par un ordinateur de bord du véhicule ou par un microprocesseur intégré dans le véhicule.

La valeur de consigne du couple réceptionnée dans l'étape E1 dépend en particulier de l'appui du conducteur sur la pédale d'accélération ou, dans le cas d'une régulation de la vitesse du véhicule, de la différence entre la vitesse du véhicule et une valeur de consigne de la vitesse.

Dans l'étape E2, la valeur de seuil d'une pression minimale est déterminée par exemple par une table de correspondance ou par une relation mathématique prédéterminée reliant la valeur de seuil d'une pression minimale à la valeur de consigne du couple. La valeur de seuil d'une pression minimale correspond à la pression minimale nécessaire dans le compresseur pour atteindre la valeur de consigne du couple en un temps prédéterminé.

Dans l'étape E3, la pression dans le compresseur est mesurée par exemple à l'aide d'un capteur de pression ou par l'intermédiaire d'un calcul reliant d'autres paramètres connus à la pression dans le compresseur.

Dans l'étape E5, la machine électrique reçoit une commande en fonction de la comparaison de la pression des gaz comprimés avec la valeur de seuil d'une pression minimale. Par exemple la machine électrique reçoit une commande pour fonctionner :

- en moteur électrique si la pression dans le compresseur est inférieure à la valeur de seuil d'une pression minimale,
- en génératrice de courant si la pression dans le compresseur est supérieure ou égale à la valeur de seuil d'une pression minimale.

La détermination de la commande de la machine électrique en fonction de la comparaison de la pression dans le compresseur avec la valeur de seuil d'une pression minimale peut être plus complexe et prendre en compte des marges de tolérances ou d'autres paramètres comme le régime du moteur à combustion ou la vitesse de rotation du compresseur, par exemple.

La figure 4 illustre un fonctionnement de l'ensemble 1 représenté en figure 1 ou de l'ensemble 1" représenté en figure 3 dans lequel la machine électrique 7 fonctionne en moteur électrique.

La machine électrique 7 fonctionne en moteur électrique car la pression dans le compresseur 4 est inférieure à la valeur de seuil d'une pression minimale et ne permet pas d'atteindre la valeur de consigne du couple en un temps suffisamment court. Le point $W_{62}$ est bien au-dessus des points $W_{64}$ et $W_{61}$ ce qui signifie que $\omega_{planétaire}$ est bien supérieure à $\omega_{porte-satellites}$ et $\omega_{couronne}$.

La machine électrique 7 est accouplée au planétaire 62 et l'entraine à haute vitesse. La turbine 3, qui est accouplée à la couronne 61, tourne à une vitesse $\omega_{couronne}$ faible.

La turbine seule ne peut pas entraîner le compresseur 4 à une vitesse suffisante pour fournir une pression permettant d'atteindre la valeur de consigne du couple dans le temps imparti. La machine électrique 7 permet de fournir un couple $C_{planétaire}$ à l'axe du planétaire qui s'ajoute au couple $C_{couronne}$ fourni par la turbine à l'axe de la couronne.

Le compresseur 4, qui est accouplé au porte-satellites 64, est ainsi entraîné en rotation à la fois par la machine électrique 7 et par la turbine 3 à une vitesse $\omega_{porte-satellites}$ suffisante pour augmenter rapidement la pression des gaz comprimés par le compresseur et permettre au moteur à combustion d'atteindre la valeur de consigne du couple en un temps suffisamment court.

Ce fonctionnement se produit typiquement à bas régimes, lorsque la turbine fournit peu de puissance. Le fonctionnement de la machine électrique 7 en moteur électrique permet une montée en couple du moteur à combustion suite à une commande d'accélération à bas régimes.

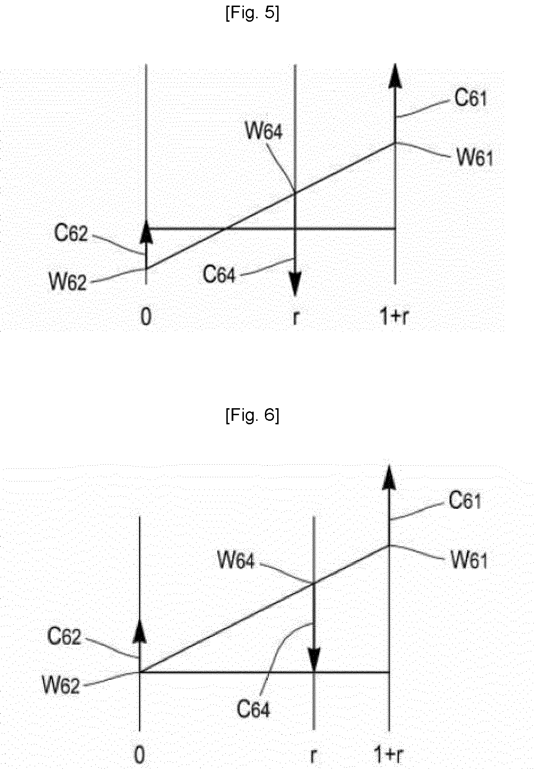

La figure 5 illustre un fonctionnement de l'ensemble 1 ou de l'ensemble 1" dans lequel la machine électrique 7 fonctionne en génératrice de courant.

La machine électrique 7 fonctionne en génératrice de courant car la pression dans le compresseur 4 est supérieure à la valeur de seuil d'une pression minimale et permet d'atteindre la valeur de consigne du couple en un temps suffisamment court.

Le point $W_{62}$ est au-dessous de l'axe ce qui signifie que $\omega_{planétaire}$ est une vitesse négative. La machine électrique 7 est accouplée au planétaire 62 et est entraînée en sens inverse par rapport à sa rotation dans un fonctionnement en moteur électrique. Les points $W_{64}$ et $W_{61}$ étant au-dessus de l'axe, les vitesses $\omega_{porte-satellites}$ et $\omega_{couronne}$ sont positives. La turbine 3, qui est accouplée à la couronne 61, tourne à une vitesse $\omega_{couronne}$ élevée. La turbine 3 fournit une énergie cinétique supérieure à ce qui est nécessaire pour entraîner le compresseur et permettre au moteur à combustion d'atteindre la valeur de consigne du couple.

Le fonctionnement en génératrice de courant de la machine électrique 7 permet de récupérer une part de l'énergie cinétique excédentaire fournie par la turbine 7 et de la convertir en énergie électrique. Cette énergie électrique peut être stockée par une batterie ou une super capacité, par exemple afin d'alimenter la machine électrique ultérieurement. Ce fonctionnement se produit typiquement à mi-régimes ou à hauts régimes, lorsque la turbine fournit beaucoup de puissance.

Le fonctionnement de la machine électrique 7 en génératrice de courant permet de limiter les pertes énergétiques.

Le procédé de l'invention peut consister à actionner le frein 8 de la machine électrique 7. Le compresseur 2 est alors entraîné en rotation par la turbine 3 à une vitesse de rotation proportionnelle à la vitesse de rotation de la turbine.

La figure 6 illustre un fonctionnement de l'ensemble 1" dans lequel le frein 8 de la machine électrique 7 est actionné. Le point $W_{62}$ est sur l'axe et $\omega_{planétaire}$ est nulle. La machine électrique 7 qui est accouplée au planétaire 62 ne tourne pas. Le compresseur 4, qui est accouplé avec le porte-satellites 64, est entraîné à une vitesse proportionnelle à la vitesse de la turbine, qui est accouplée à la couronne 61 :

$$[\text{Math 4}] \quad \omega_{porte-satellite} = \frac{r}{1+r}\,\omega_{couronne}.$$

Ce fonctionnement permet de ne pas utiliser la machine électrique 7 et de se retrouver dans un cas d'une turbine entraînant seule un compresseur avec un ratio entre la vitesse de rotation du compresseur et celle de la turbine qui est inférieur à 1.

Le procédé de l'invention peut consister à commander le module de synchronisation en position synchronisée pour synchroniser les vitesses de rotation du compresseur 4, de la turbine 3 et de la machine électrique 7. Dans ce cas, le compresseur 4, la turbine 3 et la machine électrique 7 ont des vitesses de rotation égales. Ce fonctionnement permet d'obtenir un ratio entre la vitesse de rotation du compresseur et celle de la turbine qui est égal à 1, comme c'est le cas dans une configuration classique d'un compresseur 2 et d'une turbine 3 ayant un arbre commun.

Lorsque le module de synchronisation est en position synchronisée et lorsque le frein 8 de la machine électrique 7 est actionné, les vitesses de rotation de la turbine, du compresseur et de la machine électrique sont nulles.

Le module de synchronisation 9 peut être en position synchronisée lorsque la machine électrique 7 fonctionne en moteur électrique ou lorsqu'elle est laissée libre en rotation.

En revanche, la machine électrique 7 ne peut pas fonctionner en génératrice de courant lorsque le module de synchronisation est en position synchronisée car, les vitesses $\omega_{planétaire}$, $\omega_{porte-satellites}$ et $\omega_{couronne}$ étant égales, il n'est pas possible d'avoir une vitesse $\omega_{planétaire}$ négative, ce qui est le cas lorsque la machine électrique 7 fonctionne en génératrice de courant.

Le procédé de l'invention peut consister à commander le module de synchronisation en position libre pour désynchroniser les vitesses de rotation du compresseur, de la turbine et de la machine électrique. En présence d'un module de synchronisation, il est nécessaire de commander le module de synchronisation en position libre pour faire tourner le compresseur lorsque le frein 8 est actionné ou lorsque la machine électrique 7 fonctionne en génératrice.

On comprendra que diverses modifications et/ou améliorations évidentes pour l'homme du métier peuvent être apportées aux différents modes de réalisation de l'invention décrits ou évoqués dans la présente description sans sortir du cadre de l'invention défini par les revendications annexées.

**Revendications**

**1.** [Procédé de pilotage d'un ensemble (1, 1', 1") comportant :

    - un turbocompresseur (2) de suralimentation d'un moteur à combustion, le turbocompresseur (2) comportant une turbine (3) destinée à être entraînée en rotation par des gaz d'échappement du moteur à combustion et un compresseur (4) coaxial à la turbine (3) destiné, dans un mouvement de rotation, à comprimer des gaz d'admission du moteur à combustion ; et

    - des moyens d'entraînement (5) du compresseur (4) qui comportent :

        -- un train épicycloïdal (6) comprenant une couronne (61) extérieure à denture intérieure, un planétaire (62) à denture extérieure coaxial à la couronne, au moins un satellite (63) à denture extérieure qui engrène avec le planétaire (62) et avec la couronne (61) extérieure, et un porte-satellites (64) coaxial à la couronne (61) extérieure et au planétaire (62) ; et

-- une machine électrique (7) qui peut fonctionner :

- en moteur électrique pour entraîner en rotation la couronne (61), le planétaire (62) ou le porte-satellites (64), ou
- en génératrice de courant en étant entraînée en rotation par la couronne (61), le planétaire (62) ou le porte-satellites (64) ;

chaque élément choisi parmi la turbine (3), le compresseur (4) et la machine électrique (7) étant accouplé de façon directe à l'un des composants du train épicycloïdal (6) choisi parmi la couronne (61), le planétaire (62) et le porte-satellites (64) ;

**caractérisé en ce que** le procédé de pilotage consiste à :

- réceptionner (E1) une valeur de consigne du couple à fournir par le moteur à combustion,
- déterminer (E2) une valeur de seuil d'une pression minimale des gaz d'admission comprimés par le compresseur en fonction de la valeur de consigne du couple à fournir par le moteur à combustion,
- mesurer (E3) la pression des gaz comprimés,
- comparer (E4) la pression des gaz comprimés avec la valeur de seuil d'une pression minimale,
- faire fonctionner (E5) la machine électrique :

- en moteur électrique si la pression dans le compresseur (4) est inférieure à la valeur de seuil d'une pression minimale,
- en génératrice de courant si la pression dans le compresseur (4) est supérieure ou égale à la valeur de seuil d'une pression minimale.

2. Procédé selon la revendication 1 pour le pilotage d'un ensemble (1, 1', 1") qui comporte un frein (8) commandé associé à la machine électrique (7), caractérisé en qu'il consiste à actionner le frein (8) de la machine électrique (7), le compresseur (4) étant alors entraîné en rotation par la turbine (3) à une vitesse de rotation proportionnelle à la vitesse de rotation de la turbine (3).

3. Procédé de pilotage selon la revendication 1 pour le pilotage d'un ensemble (1, 1', 1") qui comporte un module commandé de synchronisation (9) du train épicycloïdal (6) qui peut être commandé entre une position synchronisée dans laquelle le module de synchronisation (9) solidarise deux éléments parmi la couronne (61), le planétaire (62) et le porte-satellites (64), et une position libre des deux éléments, **caractérisé en ce qu'**il consiste à commander le module de synchronisation (9) en position synchronisée pour synchroniser les vitesses de rotation du compresseur (4), de la turbine (3) et de la machine électrique (7).

4. Procédé selon la revendication 3 pour le pilotage d'un ensemble (1, 1', 1"), **caractérisé en ce qu'**il consiste à commander le module de synchronisation (9) en position libre pour désynchroniser les vitesses de rotation du compresseur (4), de la turbine (3) et de la machine électrique (7).

5. Procédé selon l'une quelconque des revendications 1 à 4 pour le pilotage d'un ensemble (1, 1', 1") dans lequel :

- la machine électrique (7) est accouplée au planétaire (62) ;
- le compresseur (4) est accouplé au porte-satellites (64) ; et
- la turbine (3) est accouplée à la couronne (61).

6. Procédé selon l'une quelconque des revendications 1 à 4 pour le pilotage d'un ensemble (1, 1', 1") dans lequel :

- la machine électrique (7) est accouplée au porte-satellites (64) ;
- le compresseur (4) est accouplé au planétaire (62) ; et
- la turbine (3) est accouplée à la couronne (61).

7. Procédé selon la revendication 3 ou 4 pour le pilotage d'un ensemble (1, 1', 1") dans lequel le module de synchronisation (9) est un crabot.

**Patentansprüche**

1. Verfahren zum Regeln einer Anordnung (1, 1', 1") umfassend:

   - einen Turboverdichter (2) zum Aufladen eines Verbrennungsmotors, der Turboverdichter (2) umfassend eine Turbine (3), die dafür bestimmt ist, durch Abgase des Verbrennungsmotors rotierend angetrieben zu werden, und einen Verdichter (4), der koaxial zu der Turbine (3) ist, der dafür bestimmt ist, in einer Rotationsbewegung, Ansauggase des Verbrennungsmotors zu verdichten; und - Antriebsmittel (5) des Verdichters (4), die umfassen:

   -- einen Planetenradsatz (6), aufweisend einen Außenzahnkranz (61) mit Innenverzahnung, ein Zentralrad (62) mit Außenverzahnung koaxial zu dem Zahnkranz, mindestens ein Planetenrad (63) mit Außenverzahnung, das in das Zentralrad (62) und den Außenzahnkranz (61) eingreift, und einen Planetenradträger (64), der koaxial zu dem Außenzahnkranz (61) und dem Zentralrad (62) ist; und
   -- eine Elektromaschine (7), die tätig sein kann:

   - als Elektromotor zum Indrehungversetzen des Zahnkranzes (61), des Zentralrads (62) oder des Planetenradträgers (64) oder
   - als Stromgenerator, der durch den Zahnkranz (61), das Zentralrad (62) oder den Planetenradträger (64) rotierend angetrieben wird; wobei jedes Element, ausgewählt aus der Turbine (3), dem Verdichter (4) und der Elektromaschine (7), mit einer der Komponenten des Planetenradsatzes (6), ausgewählt aus dem Zahnkranz (61), dem Zentralrad (62) und dem Planetenradträger (64), direkt gekoppelt ist;

   **dadurch gekennzeichnet, dass** das Regelungsverfahren besteht aus:

   - einem Empfangen (E1) eines Einstellwerts des durch den Verbrennungsmotor bereitzustellenden Drehmoments,
   - einem Bestimmen (E2) eines Schwellenwerts eines Mindestdrucks der durch den Verdichter verdichteten Ansauggase in Abhängigkeit von dem Einstellwert des durch den Verbrennungsmotor bereitzustellenden Drehmoments,
   - einem Messen (E3) des Druck der verdichteten Gase,
   - einem Vergleichen (E4) des Drucks der verdichteten Gase mit dem Schwellenwert eines Mindestdrucks,
   - einem Betätigen (E5) der Elektromaschine:

   - als Elektromotor, wenn der Druck in dem Verdichter (4) geringer als der Schwellenwert eines Mindestdrucks ist,
   - als Stromgenerator, wenn der Druck in dem Verdichter (4) größer als oder gleich dem Schwellenwert eines Mindestdrucks ist.

2. Verfahren nach Anspruch 1 für das Regeln einer Anordnung (1, 1', 1"), die eine gesteuerte Bremse (8) umfasst, die mit der Elektromaschine (7) verknüpft ist, **dadurch gekennzeichnet, dass** es darin besteht, die Bremse (8) der Elektromaschine (7) zu betätigen, wobei der Verdichter (4) dann durch die Turbine (3) mit einer Drehzahl proportional zu der Drehzahl der Turbine (3) rotierend angetrieben wird.

3. Regelungsverfahren nach Anspruch 1 für das Regeln einer Anordnung (1, 1', 1"), die ein gesteuertes Synchronisationsmodul (9) des Planetenradsatzes (6) umfasst, das zwischen einer synchronisierten Position, in der das Synchronisationsmodul (9) zwei Elemente unter dem Zahnkranz (61), dem Zentralrad (62) und dem Planetenradträger (64) fest verbindet, und einer freien Position der zwei Elemente geregelt werden kann, **dadurch gekennzeichnet, dass** es aus dem Steuern des Synchronisationsmoduls (9) in der synchronisierten Position zum Synchronisieren der Drehzahlen des Verdichters (4), der Turbine (3) und der Elektromaschine (7) besteht.

4. Verfahren nach Anspruch 3 für das Regeln einer Anordnung (1, 1', 1"), **dadurch gekennzeichnet, dass** es aus dem Steuern des Synchronisationsmoduls (9) in der freien Position zum Desynchronisieren der Drehzahlen des Verdichters (4), der Turbine (3) und der Elektromaschine (7) besteht.

5. Verfahren nach einem der Ansprüche 1 bis 4 für das Regeln einer Anordnung (1, 1', 1"), wobei:

   - die Elektromaschine (7) mit dem Zentralrad (62) gekoppelt ist;

- der Verdichter (4) mit dem Planetenradträger (64) gekoppelt ist; und
- die Turbine (3) mit dem Zahnkranz (61) gekoppelt ist.

6. Verfahren nach einem der Ansprüche 1 bis 4 für das Regeln einer Anordnung (1, 1', 1"), wobei:

- die Elektromaschine (7) mit dem Planetenradträger (64) gekoppelt ist;
- der Verdichter (4) mit dem Zentralrad (62) gekoppelt ist; und
- die Turbine (3) mit dem Zahnkranz (61) gekoppelt ist.

7. Verfahren nach Anspruch 3 oder 4 für das Regeln einer Anordnung (1, 1', 1"), wobei das Synchronisationsmodul (9) eine Schaltverzahnung ist.


**Claims**

1. Method of controlling an assembly (1, 1', 1") comprising:

   - a turbocharger (2) for supercharging a combustion engine, the turbocharger (2) comprising a turbine (3) intended to be rotated by exhaust gases from the combustion engine and a compressor (4) coaxial with the turbine (3) intended, in a rotary movement, to compress intake gases from the combustion engine; and
   - drive means (5) for the compressor (4) which comprise:

     -- an epicyclic gear set (6) comprising an internally toothed outer ring gear (61), an externally toothed sun gear (62) coaxial with the ring gear, at least one externally toothed planet gear (63) meshing with the sun gear (62) and the outer ring gear (61), and a planet carrier (64) coaxial with the outer ring gear (61) and the sun gear (62); and
     -- an electric machine (7) which can operate:

        - as an electric motor to rotate the ring gear (61), sun gear (62) or planet carrier (64), or
        - as a current generator by being rotated by the ring gear (61), the sun gear (62) or the planet carrier (64); each feature selected from the turbine (3), the compressor (4) and the electric machine (7) being coupled directly to one of the components of the epicyclic gear set (6) selected from the ring gear (61), the sun gear (62) and the planet carrier (64);
        **characterized in that** the control method consists in:

           - receiving (E1) a torque setpoint to be provided by the combustion engine,
           - determining (E2) a threshold value for a minimum pressure of the intake gases compressed by the compressor based on the torque setpoint to be provided by the combustion engine,
           - measuring (E3) the pressure of the compressed gases,
           - comparing (E4) the pressure of the compressed gases with the threshold value of a minimum pressure,
           - operating (E5) the electric machine:

              - as an electric motor if the pressure in the compressor (4) falls below a minimum pressure threshold value,
              - as a current generator if the pressure in the compressor (4) is greater than or equal to the minimum pressure threshold value.

2. The method according to claim 1 for controlling an assembly (1, 1', 1") which comprises a controlled brake (8) associated with the electric machine (7), **characterized in that** it consists in actuating the brake (8) of the electric machine (7), the compressor (4) then being rotated by the turbine (3) at a rotational speed proportional to the rotational speed of the turbine (3).

3. The control method according to claim 1 for controlling an assembly (1, 1', 1") comprising a controlled synchronization module (9) for the epicyclic gear set (6) which can be controlled between a synchronized position wherein the synchronization module (9) connects two elements from the ring gear (61), the sun gear (62) and the planet carrier (64), and a free position of the two elements, **characterized in that** it consists in controlling the synchronization module (9) in the synchronized position to synchronize the rotational speeds of the compressor (4), the turbine (3) and the electric machine (7).

4. The method according to claim 3 for controlling an assembly (1, 1', 1"), **characterized in that** it consists in controlling the synchronization module (9) in the free position to desynchronize the rotational speeds of the compressor (4), the turbine (3) and the electric machine (7).

5. The method according to any one of claims 1 to 4 for controlling an assembly (1, 1', 1"), wherein:

   - the electric machine (7) is coupled to the sun gear (62);
   - the compressor (4) is coupled to the planet carrier (64); and
   - the turbine (3) is coupled to the ring gear (61).

6. The method according to any one of claims 1 to 4 for controlling an assembly (1, 1', 1"), wherein:

   - the electric machine (7) is coupled to the planet carrier (64);
   - the compressor (4) is coupled to the sun gear (62); and
   - the turbine (3) is coupled to the ring gear (61).

7. The method according to claim 3 or 4 for controlling an assembly (1, 1', 1"), wherein the synchronization module (9) is a dog.

[Fig. 1]

[Fig. 2]

[Fig. 3]

[Fig. 4]

[Fig. 5]

[Fig. 6]

**EP 3 751 112 B1**

## RÉFÉRENCES CITÉES DANS LA DESCRIPTION

**Documents brevets cités dans la description**

- DE 102011005825 A1
- DE 102009001796 A1
- US 2016017793 A1
- DE 102014218539 A1